# EUROPEAN PATENT APPLICATION

(11) **EP 3 608 635 A1**
(43) Date of publication of application: **12.02.2020**
(21) Application number: 19190522.3
(22) Date of filing: 07.08.2019
(51) Int. Cl.: G01C 21/32, B60W 30/08, G08G 1/16, G06K 9/00

(54) **POSITIONING SYSTEM**

(30) Priority: 10.08.2018 US 201862717048 P; 14.08.2018 US 201816102979
(71) Applicant: Aptiv Technologies Limited, St. Michael (BB)
(72) Inventor: Ma, Liang, Rochester Hills, MI 48306 (US)
(74) Representative: Manitz Finsterwald Patent- und Rechtsanwaltspartnerschaft mbB

(57) **Abstract**

A positioning system (10) includes a forward-viewing camera (20), a ranging-sensor (28), and one or more controller-circuits (34). The forward-viewing camera (20) detects lane-markings (22) on a roadway (18) ahead of a host-vehicle (12) traveling in a travel-lane (24). The ranging-sensor (28) detects a position (30) of an other-vehicle (16) traveling on the roadway (18) behind the host-vehicle (12). The one or more controller-circuits (34) are in communication with the forward-viewing camera (20) and the ranging-sensor (28). The one or more controller-circuits (34) determine lane-widths (38) characterized by pairs of opposed control-points (42) at a first-distance (40) ahead of the host-vehicle (12), track relative-positions (44) of the control-points (42) while the host-vehicle (12) is traveling along the roadway (18), determine a rear-side road-model (14) based on a temporal-history (46) of the relative-positions (44) of the control-points (42), determine a lateral-offset (54) of the other-vehicle (16) based on the rear-side road-model (14), and operate the host-vehicle (12) in accordance with the lateral-offset (54).

## Description

### CROSS-REFERENCE TO RELATED APPLICATION

This application claims the benefit of U.S. Provisional Patent Application No. 62/717,048, filed August 10, 2018, the entire disclosure of which is hereby incorporated herein by reference. This application also claims the benefit of U.S. Patent Application No. 16/102,979, filed August 14, 2018, the entire disclosure of which is hereby incorporated herein by reference.

### TECHNICAL FIELD OF DISCLOSURE

This disclosure generally relates to a positioning system that determines whether an other-vehicle is in an adjacent-lane.

### BACKGROUND OF THE DISCLOSURE

Rear road models, based only on a yaw rate of a host-vehicle, have limited accuracy as distance away from the host-vehicle increases.

### SUMMARY OF THE DISCLOSURE

The present disclosure proposes to solve the above mentioned problem by providing a positioning system comprising a camera, the camera rendering an image of lane-markings on a roadway ahead of a host-vehicle traveling in a travel-lane of the roadway, a ranging-sensor, the ranging-sensor detecting a position of an other-vehicle traveling on the roadway behind the host-vehicle, and one or more controller-circuits in communication with the camera and the ranging-sensor. The one or more controller-circuits determine lane-widths of the travel-lane based on the lane-markings at a first-distance ahead of the host-vehicle while the host-vehicle is traveling along the roadway, the lane-widths characterized by pairs of opposed control-points, track relative-positions of the pairs of opposed control-points to the host-vehicle while the host-vehicle is traveling along the roadway, determine a road-model based on a temporal-history of the relative-positions of the pairs of opposed control-points, the road-model including virtual-lane-markings extending beyond a rear-end of the host-vehicle for a second-distance, determine a lateral-offset of the other-vehicle based on the road-model, the lateral-offset characterized as a shortest-lateral-distance between the other-vehicle and the virtual-lane-markings, and operate the host-vehicle in accordance with the lateral-offset.

According to other advantageous features of the present invention:
- the first-distance is about 20-meters ahead of the host-vehicle;
- the one or more controller-circuits further determine the lane-widths at the first-distance ahead of the host-vehicle after the host-vehicle has traveled a distance greater than a distance-threshold;
- the distance-threshold is about 10-meters;
- the second-distance is at least 50-meters beyond the rear-end of the host-vehicle;
- the one or more controller-circuits assign the other-vehicle to an adjacent-lane when the lateral-offset is greater than an offset-threshold;
- the one or more controller-circuits determine a longitudinal-distance between the rear-end of the host-vehicle and a front-end of the other-vehicle, the longitudinal-distance characterized as a distance along a centerline of the adjacent-lane between lateral-projections orthogonal to the virtual-lane-markings;
- the virtual-lane-markings are determined based on a linear-interpolation between the pairs of opposed control-points;
- the one or more controller-circuits further determine a host-vehicle-offset characterized as a lateral-distance between sides of the host-vehicle and the virtual-lane-markings, whereby a total-lateral-distance is determined based on the lateral-offset and the host-vehicle-offset;

The present disclosure also proposes a method of operating a positioning system, said method comprising the steps of:
a. rendering an image of lane-markings on a roadway ahead of a host-vehicle traveling in a travel-lane of the roadway with a camera;
b. detecting a position of an other-vehicle traveling on the roadway behind the host-vehicle with a ranging-sensor;
c. determining lane-widths of the travel-lane based on the lane-markings at a first-distance ahead of the host-vehicle, with one or more controller-circuits in communication with the camera and the ranging-sensor, while the host-vehicle is traveling along the roadway, the lane-widths characterized by pairs of opposed control-points;
d. tracking relative-positions of the pairs of opposed control-points to the host-vehicle, with the one or more controller-circuits, while the host-vehicle is traveling along the roadway;
e. determining a road-model based on a temporal-history of the relative-positions of the pairs of opposed control-points, with the one or more controller-circuits, the road-model including virtual-lane-markings extending beyond a rear-end of the host-vehicle for a second-distance;
f. determining a lateral-offset of the other-vehicle based on the road-model, with the one or more controller-circuits, the lateral-offset characterized as a shortest-lateral-distance between the other-vehicle and the virtual-lane-markings; and
g. operating the host-vehicle in accordance with the lateral-offset.

Preferably the method further includes the steps of:
h. determining the lane-widths at the first-distance ahead of the host-vehicle after the host-vehicle has traveled a distance greater than a distance-threshold, with the one or more controller-circuits;
i. assigning the other-vehicle to an adjacent-lane, with the one or more controller-circuits, when the lateral-offset is greater than an offset-threshold;
j. determining a longitudinal-distance between the rear-end of the host-vehicle and a front-end of the other-vehicle, with the one or more controller-circuits, the longitudinal-distance characterized as a distance along a centerline of the adjacent-lane between lateral-projections orthogonal to the virtual-lane-markings;
k. determining the virtual-lane-markings based on a linear-interpolation between the pairs of opposed control-points, with the one or more controller-circuits;
1. determining a host-vehicle-offset characterized as a lateral-distance between sides of the host-vehicle and the virtual-lane-markings, with the one or more controller-circuits, whereby a total-lateral-distance is determined based on the lateral-offset and the host-vehicle-offset.

### BRIEF DESCRIPTION OF DRAWINGS

The present invention will now be described, by way of example with reference to the accompanying drawings, in which:
Fig. 1 is an illustration of a positioning system in accordance with one embodiment;
Fig. 2 is an illustration of a host-vehicle equipped with the positioning system of Fig. 1 in accordance with one embodiment;
Fig. 3 is an illustration of the host-vehicle of Fig. 2 in accordance with one embodiment; and
Fig. 4 is an illustration of a method of operating the positioning system of Fig. 1 in accordance with another embodiment.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

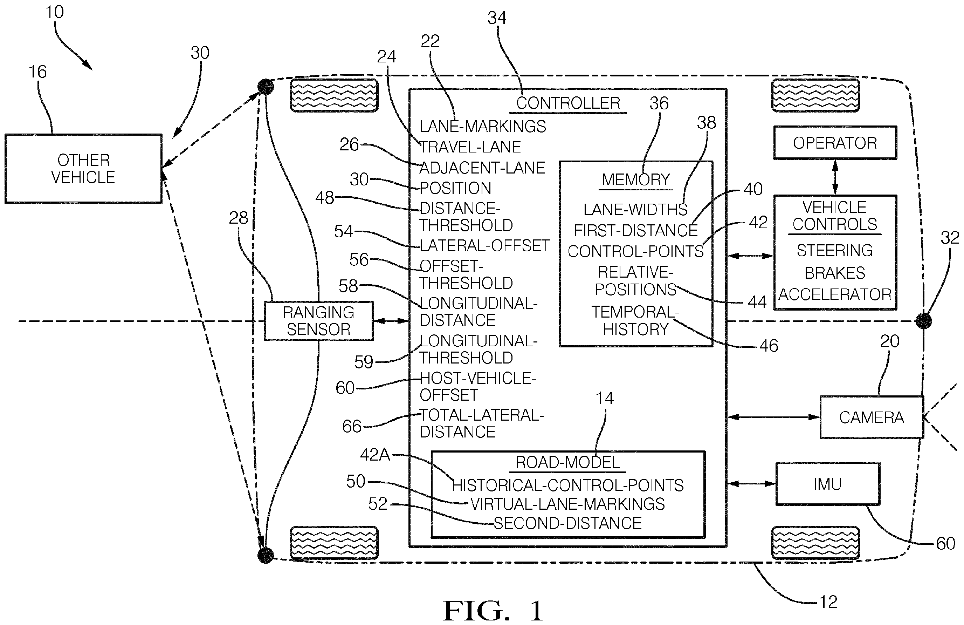

Fig. 1 illustrates a positioning system 10, hereafter referred to as the system 10, for use on an automated vehicle 12, hereafter referred to as a host-vehicle 12. As will be described in more detail below, the system 10 is an improvement on previous positioning-systems because the system 10 uses a road-model 14 to locate, i.e. determine the relative position of, an other-vehicle 16 traveling on a roadway 18 behind the host-vehicle 12, which may be beneficial for automatic-lane-change features that may be installed on the host-vehicle 12. The host-vehicle 12 may be characterized as an "automated vehicle". As used herein, the term "automated vehicle" may apply to instances when the host-vehicle 12 is being operated in an automated-mode, i.e. a fully autonomous mode, where a human-operator (not specifically shown) of the host-vehicle 12 may do little more than designate a destination to operate the host-vehicle 12. However, full automation is not a requirement. It is contemplated that the teachings presented herein are useful when the host-vehicle 12 is operated in a manual-mode where the degree or level of automation may be little more than providing an audible or visual warning to the human-operator who is generally in control of the steering, accelerator, and brakes of the host-vehicle 12. For example, the system 10 may merely assist the human-operator as needed to change lanes and/or avoid interference with and/or a collision with, for example, an object such as an other-vehicle 16, a pedestrian, or a road sign.

The system 10 includes a camera 20 configured to render an image of lane-markings 22 on the roadway 18 ahead of a host-vehicle 12 traveling in a travel-lane 24. The camera 20 may be any forward-viewing camera 20 typically used to render the image of the lane-markings 22 for autonomous vehicles and/or driver-assistance tasks. The camera 20 may be mounted on the front of the host-vehicle 12, or mounted in the interior of the host-vehicle 12 at a location suitable for the camera 20 to view the area around the host-vehicle 12 through the windshield of the host-vehicle 12. The camera 20 is preferably a video type camera 20 or camera 20 that can capture images of the roadway 18 and surrounding area at a sufficient frame-rate, of ten frames per second, for example. The image may include, but is not limited to, the lane-markings 22 on a left-side and right-side of the travel-lane 24 of the roadway 18. The image may also include the lane-markings 22 on the left-side and the right-side of an adjacent-lane 26 to the travel-lane 24. The lane-markings 22 may include a solid-line, as is typically used to indicate the boundary of the travel-lane 24 of the roadway 18. The lane-markings 22 may also include a dashed-line, as is also typically used to indicate the boundary of the travel-lane 24 of the roadway 18.

The system 10 also includes a ranging-sensor 28 configured to detect a position 30 of the other-vehicle 16 traveling on the roadway 18 behind the host-vehicle 12. The position 30 of the other-vehicle 16 detected is relative to a host-vehicle 12 coordinate-center 32, which is typically located at a front and a center of a front-bumper of the host-vehicle 12. The ranging-sensor 28 may be a radar-sensor or a lidar-sensor as will be understood by those in the art. The ranging-sensor 28 is configured to detect objects proximate to the host-vehicle 12. In the example illustrated in Figs. 1, the ranging-sensor 28 is a radar-sensor and includes a left-sensor (not specifically shown) and a right-sensor (not specifically shown). A radar sensor-system with a similarly configured radar-sensor is available from Delphi Inc. of Troy, Michigan, USA and marketed as an Electronically Scanning Radar (ESR) or a Rear-Side-Detection-System (RSDS). It is contemplated that the teachings presented herein are applicable to radar-systems with one or more sensor devices.

The system 10 also includes one or more controller-circuits 34 in communication with the camera 20 and the ranging-sensor 28. The one or more controller-circuits 34 may include a processor (not shown) such as a microprocessor or other control circuitry such as analog and/or digital control circuitry including an application specific integrated circuit (ASIC) for processing data as should be evident to those in the art. The one or more controller-circuits 34 includes a memory 36, including non-volatile-memory, such as electrically erasable-programmable-read-only-memory (EEPROM) for storing one or more routines, thresholds, and captured data. The one or more routines may be executed by the processor to perform steps for determining the position 30 of the other-vehicle 16 based on signals received by the one or more controller-circuits 34 from the camera 20 and the ranging-sensor 28, as described herein. The one or more controller-circuits 34 may analyze a radar-signal to categorize the data from each detected-target with respect to a list of previously detected-targets having established tracks. As used herein, a track refers to one or more data sets that have been associated with a particular one of the detected-targets. By way of example and not limitation, if the amplitude of the radar-signal is above a predetermined amplitude threshold, then the one or more controller-circuits 34 determines if the data corresponds to a previously detected-target or if a new-target has been detected. If the data corresponds to a previously detected-target, the data is added to or combined with prior data to update the track of the previously detected-target. If the data does not correspond to any previously detected-target because, for example, it is located too far away from any previously detected-target, then it may be characterized as a new-target and assigned a unique track identification number. The identification number may be assigned according to the order that data for a new detected-target is received, or may be assigned an identification number according to a grid location in the field-of-view of the radar-sensor. The one or more controller-circuits 34 are generally configured (e.g. programmed or hardwired) to determine a centerline (not specifically shown) of the travel-lane 24 based on the lane-markings 22 of the roadway 18 detected by the camera 20. That is, the image rendered or captured by the camera 20 is processed by the one or more controller-circuits 34 using known techniques for image-analysis to determine where along the roadway 18 the host-vehicle 12 should be operated or be steered. Vision processing technologies, such as the EYE Q® platform from Moblieye Vision Technologies, Ltd. of Jerusalem, Israel, or other suitable devices may be used. By way of example, the centerline is preferably in the middle of the travel-lane 24 traveled by the host-vehicle 12.

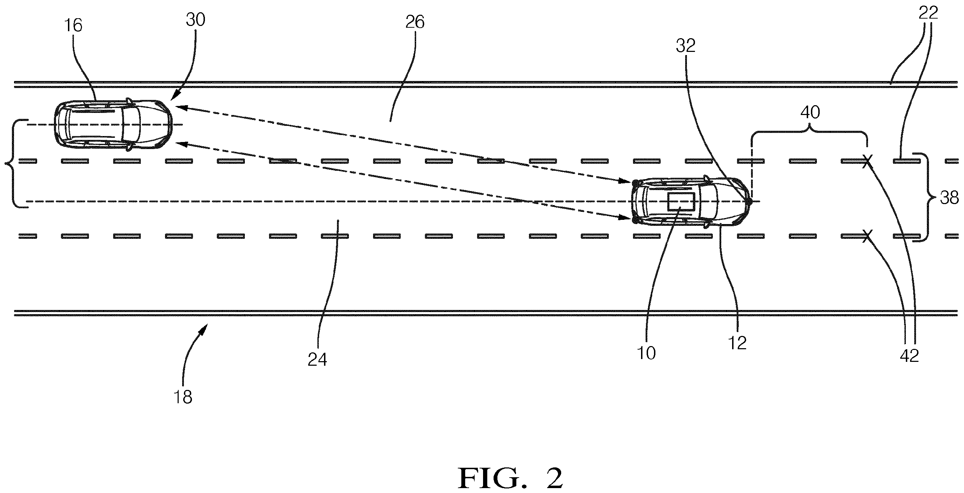

Fig. 2 illustrates a traffic scenario where the host-vehicle 12 equipped with the system 10 is traveling in the travel-lane 24, and the other-vehicle 16 is traveling in the adjacent-lane 26 behind the host-vehicle 12. The one or more controller-circuits 34 determine lane-widths 38 of the travel-lane 24 based on the lane-markings 22 at a first-distance 40 ahead of the host-vehicle 12 while the host-vehicle 12 is traveling along the roadway 18. In the example illustrated in Fig. 2, the lane-widths 38 are characterized by pairs of opposed control-points 42 (illustrated by solid-X symbols), and the first-distance 40 is about 20-meters ahead of the host-vehicle 12. As will be explained in more detail below, the pairs of opposed control-points 42 at first-distance 40 in front of the host-vehicle 12 will be repeatedly determined and tracked by the one or more controller-circuits 34 as the host-vehicle 12 travels along the roadway 18.

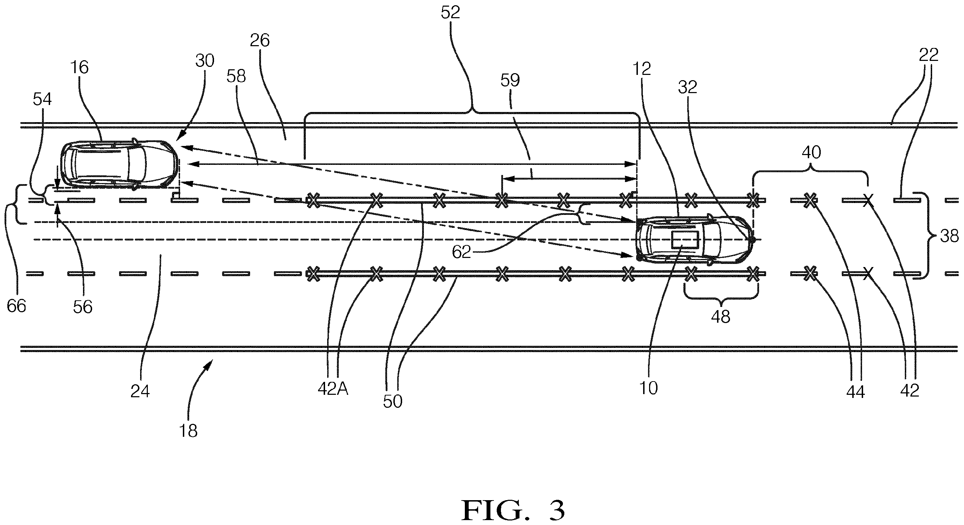

Fig. 3 illustrates the host-vehicle 12 of Fig. 2 after the host-vehicle 12 has traveled for a distance along the roadway 18 beyond the pairs of opposed control-points 42 initially determined as illustrated in Fig. 2. The one or more controller-circuits 34 track relative-positions 44 of the pairs of opposed control-points 42 to the host-vehicle 12 coordinate-center 32 while the host-vehicle 12 is traveling along the roadway 18 and store the relative-positions 44 in the memory 36. That is, the one or more controller-circuits 34 keep a time-based record (i.e., a temporal-history 46) of the relative-positions 44 of each of the pairs of opposed control-points 42 as the host-vehicle 12 approaches, and then passes-by, each of the pairs of opposed control-points 42. These historical-control-points 42A are illustrated by open-X symbols in Fig. 3 to differentiate between the control-points 42 at the first-distance 40 ahead of the host-vehicle 12 and those stored in the memory 36.

The one or more controller-circuits 34 further determine the lane-widths 38 at the first-distance 40 ahead of the host-vehicle 12 after the host-vehicle 12 has traveled the distance greater than a distance-threshold 48. Experimentation by the inventor has discovered that the distance-threshold 48 of about 10-meters provides a good balance between memory 36 capacity and accuracy of the road-model 14, as will be explained in more detail below. In other words, the one or more controller-circuits 34 repeatedly determine the lane-widths 38 at 20-meters ahead of the host-vehicle 12 after every 10-meters of travel distance.

Referring back to Fig. 3, the one or more controller-circuits 34 determine the road-model 14 based on the temporal-history 46 of the relative-positions 44 of the pairs of opposed control-points 42. The road-model 14 includes virtual-lane-markings 50 extending beyond a rear-end of the host-vehicle 12 for a second-distance 52, which is preferably at least 50-meters beyond the rear-end of the host-vehicle 12. The virtual-lane-markings 50 of the road-model 14 indicate the boundaries of the travel-lane 24 behind the host-vehicle 12 and are used to determine a lateral-offset 54 of the other-vehicle 16. The virtual-lane-markings 50 are determined based on a linear-interpolation between the pairs of opposed control-points 42. The linear-interpolation has the technical benefit of not requiring the one or more controller-circuits 34 to perform a polynomial fit of the successive pairs of opposed control-points 42 stored in the memory 36, thereby reducing computational demands on the processor. The lateral-offset 54 is characterized as a shortest-lateral-distance between the other-vehicle 16 and the virtual-lane-markings 50, as illustrated in Fig. 3, and may include values less than zero due to the location of the host-vehicle 12 coordinate-center 32. The inventor has discovered that using linear-interpolation is sufficient for the accuracy of the road-model 14 on both straight and curved roadways 18.

The one or more controller-circuits 34 assign the other-vehicle 16 to the adjacent-lane 26 when the lateral-offset 54 is greater than an offset-threshold 56. The offset-threshold 56 may be user defined and is preferably less than 0.1-meters. It will be appreciated that that the offset-threshold 56 may be a negative value when the other-vehicle 16 is traveling in the adjacent-lane 26 on the right-hand side of the host-vehicle 12 illustrated in Fig. 3 due to the location of the host-vehicle 12 coordinate-center 32.

Referring again to Fig. 3, the one or more controller-circuits 34 also determine a longitudinal-distance 58 between the rear-end of the host-vehicle 12 and a front-end of the other-vehicle 16. The longitudinal-distance 58 is characterized as the distance along a centerline of the adjacent-lane 26 between lateral-projections orthogonal to the virtual-lane-markings 50. It will be appreciated that the longitudinal-distance 58 is an important feature of the system 10 for collision avoidance.

The one or more controller-circuits 34 operate the host-vehicle 12 in accordance with the lateral-offset 54, and may restrict the host-vehicle 12 from performing a lane-change maneuver into the adjacent-lane 26 if the other-vehicle 16 poses a threat for a collision. For example, when the other-vehicle 16 has exceeded the offset-threshold 56 described above and is assigned to the adjacent-lane 26, and the longitudinal-distance 58 is less than a longitudinal-threshold 59 (see Fig. 3). The longitudinal-threshold 59 required to permit the host-vehicle 12 to perform the lane-change maneuver may be based on a speed of the host-vehicle 12 and the speed of the other-vehicle 16. For example, the longitudinal-threshold 59 of greater than 10-meters may be adequate for the lane-change maneuver when the host-vehicle 12 and the other-vehicle 16 are traveling at the speed of 50-km/hour. It will be appreciated that larger values of the longitudinal-threshold 59 may be required as the vehicle speeds increase, and/or when the other-vehicle 16 is traveling at a greater speed than the host-vehicle 12.

Referring back to Fig. 1, in another embodiment the system 10 further includes an inertial-measurement-unit 60 (IMU 60) in communication with the one or more controller-circuits 34. The IMU 60 detects a host-vehicle-yaw to more accurately determine the location of the host-vehicle 12 coordinate-center 32, which is a primary datum for all host-vehicle 12 positioning measurements. The one or more controller-circuits 34 further determine a host-vehicle-offset 62 characterized as a lateral-distance between sides of the host-vehicle 12 and the virtual-lane-markings 50 (see Fig. 3), whereby a total-lateral-distance 66 is determined based on the lateral-offset 54 and the host-vehicle-offset 62. The total-lateral-distance 66 defines a lateral-separation between the host-vehicle 12 and the other-vehicle 16.

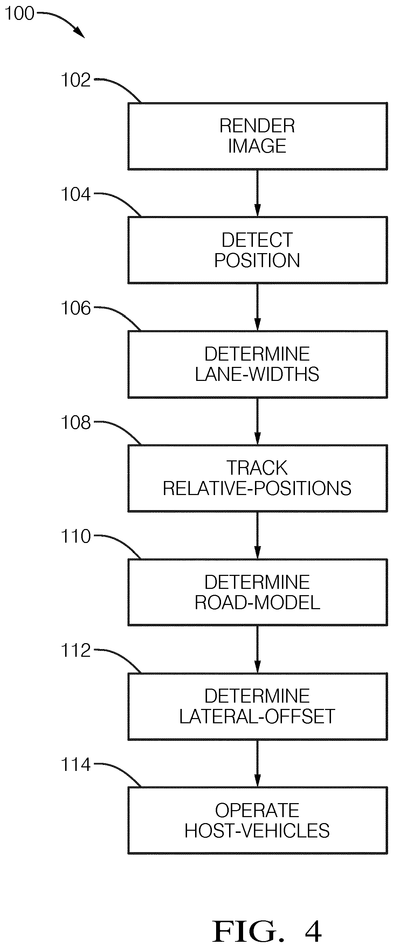

Fig. 4 is a flow chart illustrating another embodiment of a method 100 of operating a positioning system 10, hereafter referred to as the system 10.

Step 102, RENDER IMAGE, includes rendering an image of lane-markings 22 on the roadway 18 ahead of a host-vehicle 12 traveling in a travel-lane 24 with a camera 20 as described above.

Step 104, DETECT POSITION, detecting a position 30 of an other-vehicle 16 traveling on the roadway 18 behind the host-vehicle 12 with a ranging-sensor 28.

Step 106, DETERMINE LANE-WIDTHS, includes determining lane-widths 38 of the travel-lane 24, with the one or more controller-circuits 34, based on the lane-markings 22 at a first-distance 40 ahead of the host-vehicle 12 while the host-vehicle 12 is traveling along the roadway 18. In the example illustrated in Fig. 2, the lane-widths 38 are characterized by pairs of opposed control-points 42 (illustrated by the solid-X symbols). The one or more controller-circuits 34 further determine the lane-widths 38 at the first-distance 40 ahead of the host-vehicle 12 after the host-vehicle 12 has traveled a distance greater than a distance-threshold 48, as illustrated in Fig. 3.

Step 108, TRACK RELATIVE-POSITIONS, includes tracking relative-positions 44 of the pairs of opposed control-points 42 to the host-vehicle 12, with one or more controller-circuits 34, while the host-vehicle 12 is traveling along the roadway 18 as described above. The one or more controller-circuits 34 store the relative-positions 44 in a memory 36.

Step 110, DETERMINE ROAD-MODEL, includes determining a road-model 14 based on a temporal-history 46 of the relative-positions 44 of the pairs of opposed control-points 42 stored in the memory 36, with the one or more controller-circuits 34. The road-model 14 includes virtual-lane-markings 50 extending beyond a rear-end of the host-vehicle 12 for a second-distance 52. The virtual-lane-markings 50 are determined based on a linear-interpolation between the pairs of opposed control-points 42.

Step 112, DETERMINE LATERAL-OFFSET, includes determining a lateral-offset 54 of the other-vehicle 16 based on the road-model 14 with the one or more controller-circuits 34. The lateral-offset 54 is characterized as a shortest-lateral-distance between the other-vehicle 16 and the virtual-lane-markings 50. The one or more controller-circuits 34 assign the other-vehicle 16 to an adjacent-lane 26 when the lateral-offset 54 is greater than an offset-threshold 56. The one or more controller-circuits 34 determine a longitudinal-distance 58 between the rear-end of the host-vehicle 12 and a front-end of the other-vehicle 16 as described above. The one or more controller-circuits 34 also determine a host-vehicle-offset 62 characterized as a lateral-distance between sides of the host-vehicle 12 and the virtual-lane-markings 50, whereby a total-lateral-distance 66 is determined based on the lateral-offset 54 and the host-vehicle-offset 62.

Step 114, OPERATE HOST-VEHICLE, includes operating the host-vehicle 12 in accordance with the lateral-offset 54, with the one or more controller-circuits 34, and may restrict the host-vehicle 12 from performing a lane-change maneuver into the adjacent-lane 26 if the other-vehicle 16 poses a threat for a collision.

In yet another embodiment a first device includes one or more processors, memory, and one or more programs stored in the memory. The one or more programs including instructions for performing the method of any one of the steps described above.

In yet another embodiment, a non-transitory computer-readable storage-medium includes one or more programs for execution by one or more processors of a first device. The one or more programs including instructions which, when executed by the one or more processors, cause the first device to perform any of the steps described above.

Accordingly, a positioning system 10 (the system 10), and a method 100 of operating the positioning system 10, are provided. The system 10 is an improvement over other positioning-systems because the system 10 uses a forward-viewing camera 20 to develop a rear-side road-model 14 to determine whether the other-vehicle 16 is traveling in the adjacent-lane 26 behind the host-vehicle 12, and may prevent the host-vehicle 12 from making the lane-change maneuver into the adjacent-lane 26 to avoid the collision.

While this invention has been described in terms of the preferred embodiments thereof, it is not intended to be so limited, but rather only to the extent set forth in the claims that follow. "One or more" includes a function being performed by one element, a function being performed by more than one element, e.g., in a distributed fashion, several functions being performed by one element, several functions being performed by several elements, or any combination of the above. It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact. The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

## Claims

1. A positioning system (10), said system (10) comprising:
a camera (20), the camera (20) rendering an image of lane-markings (22) on a roadway (18) ahead of a host-vehicle (12) traveling in a travel-lane (24) of the roadway (18);
a ranging-sensor (28), the ranging-sensor (28) detecting a position (30) of an other-vehicle (16) traveling on the roadway (18) behind the host-vehicle (12); and
one or more controller-circuits (34) in communication with the camera (20) and the ranging-sensor (28), the one or more controller-circuits (34):
determining lane-widths (38) of the travel-lane (24) based on the lane-markings (22) at a first-distance (40) ahead of the host-vehicle (12) while the host-vehicle (12) is traveling along the roadway (18), the lane-widths (38) having pairs of opposed control-points (42);
tracking relative-positions (44) of the pairs of opposed control-points (42) to the host-vehicle (12) while the host-vehicle (12) is traveling along the roadway (18);
determining a road-model (14) based on a temporal-history (46) of the relative-positions (44) of the pairs of opposed control-points (42), the road-model (14) including virtual-lane-markings (50) extending beyond a rear-end of the host-vehicle (12) for a second-distance (52);
determining a lateral-offset (54) of the other-vehicle (16) based on the road-model (14), the lateral-offset (54) being a shortest-lateral-distance between the other-vehicle (16) and the virtual-lane-markings (50); and
operating the host-vehicle (12) in accordance with the lateral-offset (54).

2. The system (10) in accordance with claim 1, wherein the first-distance (40) is 20-meters ahead of the host-vehicle (12).

3. The system (10) in accordance with any one of the preceding claims, wherein the one or more controller-circuits (34) further determine the lane-widths (38) at the first-distance (40) ahead of the host-vehicle (12) after the host-vehicle (12) has traveled a distance greater than a distance-threshold (48).

4. The system (10) in accordance with claim 3, wherein the distance-threshold (48) is 10-meters.

5. The system (10) in accordance with any one of the preceding claims, wherein the second-distance (52) is at least 50-meters beyond the rear-end of the host-vehicle (12).

6. The system (10) in accordance with any one of the preceding claims, wherein the one or more controller-circuits (34) assign the other-vehicle (16) to an adjacent-lane (26) when the lateral-offset (54) is greater than an offset-threshold (56).

7. The system (10) in accordance with claim 6, wherein the one or more controller-circuits (34) determine a longitudinal-distance (58) between the rear-end of the host-vehicle (12) and a front-end of the other-vehicle (16), the longitudinal-distance (58) being a distance along a centerline of the adjacent-lane (26) between lateral-projections orthogonal to the virtual-lane-markings (50).

8. The system (10) in accordance with any one of the preceding claims, wherein the virtual-lane-markings (50) are determined based on a linear-interpolation between the pairs of opposed control-points (42).

9. The system (10) in accordance with any one of the preceding claims, wherein the one or more controller-circuits (34) further determine a host-vehicle-offset (62) being a lateral-distance between sides of the host-vehicle (12) and the virtual-lane-markings (50), whereby a total-lateral-distance (66) is determined based on the lateral-offset (54) and the host-vehicle-offset (62).

10. A method (100) of operating a positioning system (10), said method (100) comprising:
rendering an image (102) of lane-markings (22) on a roadway (18) ahead of a host-vehicle (12) traveling in a travel-lane (24) of the roadway (18) with a camera (20);
detecting a position (104) of an other-vehicle (16) traveling on the roadway (18) behind the host-vehicle (12) with a ranging-sensor (28);
determining lane-widths (106) of the travel-lane (24) based on the lane-markings (22) at a first-distance (40) ahead of the host-vehicle (12), with one or more controller-circuits (34) in communication with the camera (20) and the ranging-sensor (28), while the host-vehicle (12) is traveling along the roadway (18), the lane-widths (38) **characterized by** pairs of opposed control-points (42);
tracking relative-positions (108) of the pairs of opposed control-points (42) to the host-vehicle (12), with the one or more controller-circuits (34), while the host-vehicle (12) is traveling along the roadway (18);
determining a road-model (110) based on a temporal-history (46) of the relative-positions (44) of the pairs of opposed control-points (42), with the one or more controller-circuits (34), the road-model (14) including virtual-lane-markings (50) extending beyond a rear-end of the host-vehicle (12) for a second-distance (52); and
determining a lateral-offset (112) of the other-vehicle (16) based on the road-model (14), with the one or more controller-circuits (34), the lateral-offset (54) being a shortest-lateral-distance between the other-vehicle (16) and the virtual-lane-markings (50); and
operating the host-vehicle (114) in accordance with the lateral-offset (54).

11. The method (100) in accordance with claim 10, further including the step of determining the lane-widths (38) at the first-distance (40) ahead of the host-vehicle (12) after the host-vehicle (12) has traveled a distance greater than a distance-threshold (48), with the one or more controller-circuits (34).

12. The method (100) in accordance with claims 10 or 11, further including the step of assigning the other-vehicle (16) to an adjacent-lane (26), with the one or more controller-circuits (34), when the lateral-offset (54) is greater than an offset-threshold (56).

13. The method (100) in accordance with claim 12, further including the step of determining a longitudinal-distance (58) between the rear-end of the host-vehicle (12) and a front-end of the other-vehicle (16), with the one or more controller-circuits (34), the longitudinal-distance (58) being a distance along a centerline of the adjacent-lane (26) between lateral-projections orthogonal to the virtual-lane-markings (50).

14. The method (100) in accordance with any one of claims 10-13, further including the step of determining the virtual-lane-markings (50) based on a linear-interpolation between the pairs of opposed control-points (42), with the one or more controller-circuits (34).

15. The method (100) in accordance with any one of claims 10-14, further including the step of determining a host-vehicle-offset (62) being a lateral-distance between sides of the host-vehicle (12) and the virtual-lane-markings (50), with the one or more controller-circuits (34), whereby a total-lateral-distance (66) is determined based on the lateral-offset (54) and the host-vehicle-offset (62).
